# EUROPEAN PATENT APPLICATION

(11) **EP 4 675 720 A1**
(43) Date of publication of application: **07.01.2026**
(21) Application number: 23924959.2
(22) Date of filing: 27.10.2023
(51) Int. Cl.: H01M 10/04, H01M 50/40

(54) **BATTERY CELL, BATTERY MODULE, AND VEHICLE**

(30) Priority: 28.02.2023 CN 202320440037 U
(71) Applicant: BYD Company Limited, Shenzhen, Guangdong 518118 (CN)
(72) Inventor: DENG, Dongjun, Shenzhen, Guangdong 518118 (CN); LIANG, Guihai, Shenzhen, Guangdong 518118 (CN); CHEN, Guangan, Shenzhen, Guangdong 518118 (CN); DUAN, Pingan, Shenzhen, Guangdong 518118 (CN); YUAN, Wansong, Shenzhen, Guangdong 518118 (CN)
(74) Representative: Mathys & Squire
(86) International application number: PCT/CN2023/126971
(87) International publication number: WO 2024/179005

(57) **Abstract**

A battery cell (100), a battery module, and a vehicle are provided. The battery cell (100) includes a housing (1) and an electrode core (3). In a first direction, cover plates (2) are disposed on two opposite sides of the housing (1), and a terminal pole (21) is disposed on each cover plate (2). The electrode core (3) is disposed in the housing, the electrode core (3) includes a positive electrode plate (31), a negative electrode plate (32), and a diaphragm (33), the diaphragm (33) is disposed between the positive electrode plate (31) and the negative electrode plate (32), the positive electrode plate (31) is electrically connected to one of the terminal poles (21) through a positive tab, and the negative electrode plate (32) is electrically connected to the other of the terminal poles (21) through a negative tab (321). Support portions (5) abutting against the diaphragm (33) are disposed on inner sides of the two cover plates (2). In the first direction, a length of the diaphragm (33) is 'L diaphragm', a minimum distance between the support portions (5) on two sides of the electrode core (3) is 'L spacing', and the battery cell meets the following condition: L diaphragm - 6 mm < L spacing ≤ L diaphragm.

## Description

### CROSS-REFERENCE TO RELATED APPLICATIONS

This application claims priority to Chinese Patent Application No. 2023204400370, filed on February 28, 2023 and entitled "BATTERY CELL, BATTERY MODULE, AND VEHICLE", which is incorporated herein by reference in its entirety.

### TECHNICAL FIELD

This application relates to the field of battery technologies, and in particular, to a battery cell, a battery module, and a vehicle.

### BACKGROUND

Among all energy forms, electric energy is the most user-friendly and cleanest energy with optimal environmental compatibility and peak efficiency. Batteries are the best apparatuses for storing electric energy, are widely used in people's daily life, and have significant influence on people's life. With gradual development of battery technologies, batteries with good performance are increasingly popular. In a related technology, an electrode core of a battery is mounted in a housing, but the limiting effect of the housing on the electrode core is poor, especially, the limiting effect on a diaphragm in the electrode core is extremely poor, and the electrode core is prone to movement and deformation in the housing, resulting in degraded overall quality of the battery, and leaving room for improvement.

### SUMMARY

This application is intended to resolve at least one of technical problems in the conventional technology. Therefore, an objective of this application is to provide a battery cell, to limit a diaphragm of an electrode core, so as to avoid relative movement between the diaphragm and a positive electrode plate or a negative electrode plate, thereby improving reliability of the electrode core.

This application further provides a battery module in which the foregoing battery cell is used.

This application further provides a vehicle in which the foregoing battery module is used.

A battery cell according to an embodiment of this application includes: a housing, wherein a first direction, cover plates are disposed on two opposite sides of the housing, and a terminal pole is disposed on each of the cover plates; and an electrode core, wherein the electrode core is disposed in the housing, the electrode core including a positive electrode plate, a negative electrode plate, and a diaphragm, the diaphragm being disposed between the positive electrode plate and the negative electrode plate, the positive electrode plate being electrically connected to one of the terminal poles through a positive tab, and the negative electrode plate being electrically connected to the other of the terminal poles through a negative tab. Support portions abutting against the diaphragm are disposed on inner sides of the two cover plates. In the first direction, a length of the diaphragm is 'L diaphragm', a minimum distance between the support portions on two sides of the electrode core is 'L spacing', and the battery cell meets the following condition: L diaphragm - 6 mm < L spacing ≤ L diaphragm.

According to the battery cell in this embodiment of this application, the minimum distance between the support portions on two sides of the electrode core is limited to be in a range, so that the support portions on two sides can limit the diaphragm of the electrode core, to avoid relative movement between the diaphragm and the positive electrode plate or the negative electrode plate. This reduces a possibility of deformation of the electrode core, improves overall stability of the electrode core, and improves reliability of the battery cell.

A battery module according to this application includes: a box; and a plurality of battery cells, wherein the battery cell is the battery cell according to any one of the foregoing embodiments, and the plurality of battery cells are disposed in the box.

A vehicle according to this application includes the foregoing battery module.

Additional aspects and advantages of this application are partially provided in the following descriptions, and some of the additional aspects and advantages will become apparent from the following descriptions, or be understood from practice of this application.

### BRIEF DESCRIPTION OF DRAWINGS

FIG. 1 is a schematic structural diagram of a battery cell according to an embodiment of this application;
FIG. 2 is a cross-sectional view of mounting an electrode core according to an embodiment of this application;
FIG. 3 is a schematic diagram of a spacer ring according to an embodiment of this application;
FIG. 4 is a schematic diagram of a cover plate according to another embodiment of this application;
FIG. 5 is a cross-sectional view of a battery cell according to an embodiment of this application;
FIG. 6 is a schematic diagram of mounting an insulation film according to an embodiment of this application; and
FIG. 7 is an exploded view of a battery cell according to an embodiment of this application.

Reference numerals in this specification are as follows:
battery cell 100;
housing 1; cover plate 2; terminal pole 21; insulation portion 22;
electrode core 3; positive electrode plate 31; negative electrode plate 32; negative tab 321; diaphragm 33; first surface 34; second surface 35; spacer ring 4; accommodating cavity 41; support portion 5; insulation film 6; edge 61; insulation connection film 7.

### DESCRIPTION OF EMBODIMENTS

The following describes in detail embodiments of this application, examples of the embodiments are shown in the accompanying drawings, where reference numerals that are identical or similar throughout represent identical or similar elements or elements having identical or similar functions. The following embodiments described with reference to the accompanying drawings are examples, and are intended merely to explain this application and should not be understood as a limitation on this application.

The following describes a battery cell 100 according to an embodiment of this application with reference to the accompanying drawings.

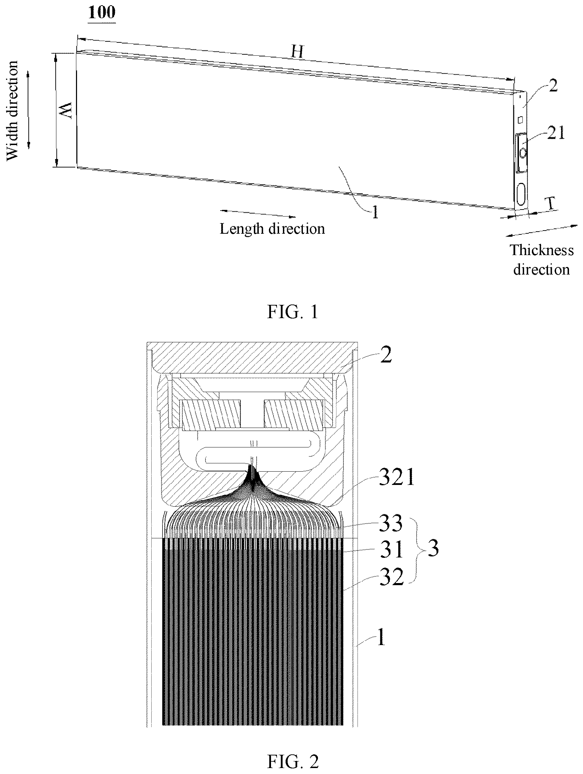

As shown in FIG. 1 to FIG. 7, the battery cell 100 according to this embodiment of this application includes a housing 1 and an electrode core 3. In a first direction, cover plates 2 are disposed on two opposite sides of the housing 1, and a terminal pole 21 is disposed on each cover plate 2. The electrode core 3 is disposed in the housing 1, the electrode core 3 includes a positive electrode plate 31, a negative electrode plate 32, and a diaphragm 33, the diaphragm 33 is disposed between the positive electrode plate 31 and the negative electrode plate 32, the positive electrode plate 31 is electrically connected to one of the terminal poles 21 through a positive tab, and the negative electrode plate 32 is electrically connected to the other of the terminal poles 21 through a negative tab 321. Support portions 5 abutting against the diaphragm 33 are disposed on inner sides of the two cover plates 2. In the first direction, a length of the diaphragm 33 is 'L diaphragm', a minimum distance between the support portions 5 on two sides of the electrode core 3 is 'L spacing', and the battery cell 100 meets the following condition: L diaphragm - 6 mm < L spacing ≤ L diaphragm.

Therefore, the support portions 5 on two sides can limit the diaphragm 33 of the electrode core 3, to avoid relative movement between the diaphragm 33 and the positive electrode plate 31 or the negative electrode plate 32. This reduces a possibility of deformation of the electrode core 3, improves overall stability of the electrode core 3, and improves reliability of the battery cell 100.

For example, as shown in FIG. 1 to FIG. 6, the battery cell 100 includes the housing 1 and the electrode core 3. The housing 1 is constructed as a cuboid. Openings are formed at two ends of the housing 1 in the first direction (that is, a length direction shown in FIG. 1), and two cover plates 2 are disposed. The two cover plates 2 are configured to be respectively mounted on two openings of the housing 1 to close the openings, so that the housing 1 and the cover plate 2 can define a sealed mounting cavity. Each cover plate 2 is provided with the terminal pole 21. The terminal pole 21 extends through the cover plate 2 in a thickness direction and extends into the mounting cavity.

The electrode core 3 may be mounted in the mounting cavity of the housing 1. The electrode core 3 includes the positive electrode plate 31, the negative electrode plate 32, and the diaphragm 33. A plurality of positive electrode plates 31 and a plurality of negative electrode plates 32 are disposed, and the plurality of positive electrode plates 31 and the plurality of negative electrode plates 32 are arranged in a staggered manner. A plurality of diaphragms 33 are disposed, and the diaphragms 33 are configured to be sandwiched between the positive electrode plate 31 and the negative electrode plate 32 that are adjacent to each other, to separate the positive electrode plate 31 from the negative electrode plate 32. The positive tab is disposed on one side of the positive electrode plate 31 in the first direction, and the positive electrode plate 31 may be electrically connected to the terminal pole 21 on a corresponding side through the positive tab. The negative tab 321 is disposed on the other side of the negative electrode plate 32 in the first direction, and the negative electrode plate 32 may be electrically connected to the other terminal pole 21 through the negative tab 321, so that the electrode core 3 can supply power to the outside.

The support portions 5 may be respectively disposed on the inner sides of the two cover plates 2. Two support portions 5 are disposed, and the two support portions 5 are respectively disposed on two sides of the tab. The support portion 5 is configured to abut against an end portion of the electrode core 3 to limit the electrode core 3 in the first direction, thereby preventing the electrode core 3 from moving in the first direction. In the first direction, a length of the diaphragm 33 may be set to an L diaphragm, a minimum distance between the support portions 5 on two sides of the electrode core 3 may be set to an L spacing, and the battery cell 100 meets the following condition: L diaphragm - 6 mm < L spacing ≤ L diaphragm.

The length of the L diaphragm of the diaphragm 33 may be greater than or equal to the minimum distance of the L spacing between the support portions 5 on two sides of the electrode core 3, and be less than the minimum distance of the L spacing between the support portions 5 on two sides of the electrode core 3 plus 6 mm. In this way, the support portions 5 on two sides can limit the diaphragm 33 in the first direction, so as to improve mounting stability of the diaphragm 33, and reduce a possibility of movement of the diaphragm 33 relative to the positive electrode plate 31 and the negative electrode plate 32, so that the diaphragm 33 can stably separate the positive electrode plate 31 from the negative electrode plate 32, thereby improving stability of the electrode core 3, and reducing a probability of deformation of the electrode core 3. Therefore, reliability of the battery cell 100 is improved.

According to the battery cell 100 in this embodiment of this application, the minimum distance between the support portions 5 on two sides of the electrode core 3 is limited to be in a range, so that the support portions 5 on two sides can limit the diaphragm 33 of the electrode core 3, to avoid relative movement between the diaphragm 33 and the positive electrode plate 31 or the negative electrode plate 32. This reduces a possibility of deformation of the electrode core 3, improves overall stability of the electrode core 3, and improves reliability of the battery cell 100.

In some embodiments of this application, a spacer ring 4 is disposed on an inner side of at least one cover plate 2, the spacer ring 4 is provided with an accommodating cavity 41 configured to accommodate the positive tab or the negative tab 321, and the support portion 5 is disposed on a corresponding spacer ring 4.

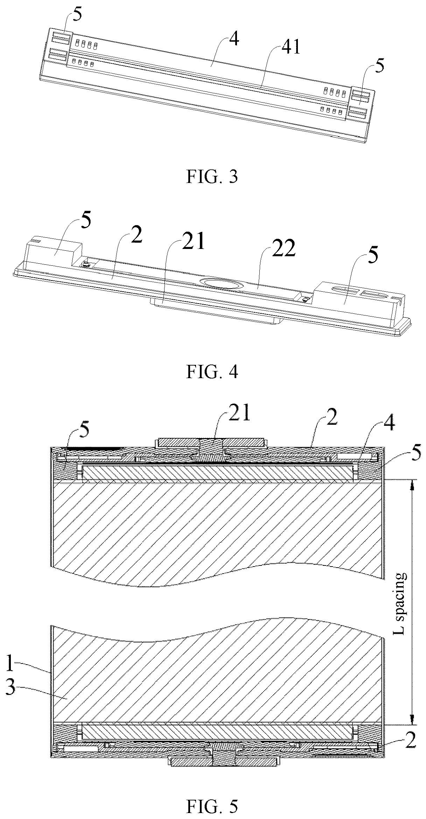

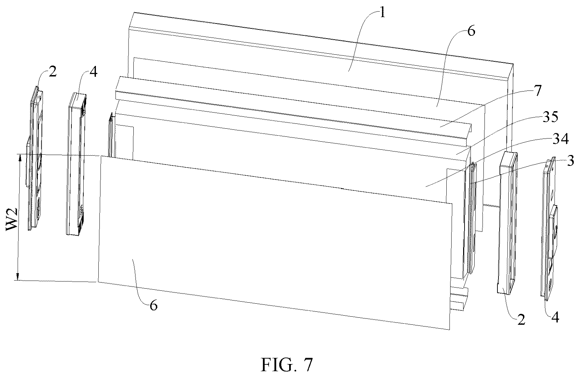

For example, as shown in FIG. 3 and FIG. 7, the battery cell 100 may be set to have the spacer ring 4, and the spacer ring 4 is disposed conformally relative to an opening. The spacer ring 4 is configured to be mounted between the inner side of the cover plate 2 (that is, a side facing the mounting cavity) and an end portion of the electrode core 3 in the first direction, so that the spacer ring 4 can insulate the cover plate 2 from the electrode core 3. The accommodating cavity 41 is formed on the spacer ring 4, the accommodating cavity 41 extends through the spacer ring 4 in the thickness direction, and the accommodating cavity 41 of the spacer ring 4 is configured to accommodate the positive tab (or the negative tab 321), so that the positive tab (or the negative tab 321) can extend through the spacer ring 4 to be connected to the terminal pole 21 on a corresponding side. In addition, the support portion 5 may be disposed on a side that is of the spacer ring 4 and that faces the electrode core 3, and the support portion 5 is configured to limit and support the electrode core 3, so that the cover plate 2 can limit the electrode core 3 by using the spacer ring 4.

Disposing the support portion 5 on the spacer ring 4 can reduce processing difficulty of the cover plate 2, and help reduce processing costs.

In some embodiments of this application, the support portion 5 and the cover plate 2 are an integral member. For example, as shown in FIG. 4, the support portion 5 and the cover plate 2 may be integrally formed to dispose the support portion 5 on the inner side of the cover plate 2, and an insulation portion 22 may be integrated on the inner side of the cover plate 2. After the cover plate 2 is mounted on the opening of the housing 1, the insulation portion 22 and the support portion 5 may insulate the cover plate 2 from the electrode core 3, and the support portion 5 may be supported on the electrode core 3, to limit the electrode core 3. Based on the foregoing disposing, the cover plate 2 can be assembled through single mounting, which helps reduce mounting difficulty of the battery cell 100 and improves processing efficiency of the battery cell 100.

In some embodiments of this application, a value of a length (H) of the battery cell 100 is 400 mm ≤ H ≤ 1500 mm, a value of a height (W) of the battery cell 100 is 80 mm ≤ W ≤ 240 mm, and a value of a thickness (T) of the battery cell 100 is 10 mm ≤ T ≤ 40 mm.

For example, as shown in FIG. 1, the value of the length H of the battery cell 100 may be 600 mm. Alternatively, the value of the length H of the battery cell 100 may be 950 mm. Alternatively, the value of the length H of the battery cell 100 may be 1300 mm. Alternatively, the value of the length H of the battery cell 100 may be any value that meets a condition. This is not limited in this application. Therefore, an excessively long length of the battery cell 100 can be avoided, which improves structural stability of the battery cell 100. In addition, an excessively short length of the battery cell 100 can be avoided, which helps increase energy density of the battery cell 100, and improves practicality of the battery cell 100.

As shown in FIG. 1, the value of the width W of the battery cell 100 may be 100 mm. Alternatively, the value of the width W of the battery cell 100 may be 160 mm. Alternatively, the value of the width W of the battery cell 100 may be 220 mm. Alternatively, the value of the width W of the battery cell 100 may be any value that meets a condition. This is not limited in this application. Therefore, an excessively long width of the battery cell 100 can be avoided, which improves structural stability of the battery cell 100. In addition, an excessively short width of the battery cell 100 can be avoided, which helps increase energy density of the battery cell 100.

In some embodiments of this application, as shown in FIG. 1, the value of the thickness T of the battery cell 100 may be 15 mm. Alternatively, the value of the thickness T of the battery cell 100 may be 25 mm. Alternatively, the value of the thickness T of the battery cell 100 may be 35 mm. Alternatively, the value of the thickness T of the battery cell 100 may be any value that meets a condition. This is not limited in this application. Therefore, an excessively long thickness of the battery cell 100 can be prevented from affecting heat dissipation performance of the battery cell 100, and an excessively short thickness of the battery cell 100 can be prevented from affecting structural stability of the battery cell 100, thereby improving practicality of the battery cell 100.

In some embodiments of this application, the electrode core 3 includes two first surfaces 34 disposed opposite to each other, and an area of the first surfaces 34 is greater than an area of a remaining surface of the electrode core 3. The battery cell 100 further includes two insulation films 6, and the two insulation films 6 are respectively attached to the two first surfaces 34. The first direction is a length direction of the first surface 34.

For example, as shown in FIG. 7, two opposite side surfaces of the electrode core 3 in the thickness direction may be set to the first surfaces 34, and the area of the first surfaces 34 is greater than the area of the remaining surface of the electrode core 3. The battery cell 100 has two insulation films 6, the insulation film 6 comprises a thermal composite film, the two insulation films 6 are respectively glued to the two first surfaces 34, and the first direction may be set to the length direction of the first surface 34, so that the two cover plates 2 can be respectively disposed at two ends of the electrode core 3 in the length direction. Edges 61 of the two insulation films 6 in the width direction of the electrode core 3 may be connected through an insulation connection film 7, so that the insulation film 6 can insulate the electrode core 3 from the housing 1 around a circumference of the electrode core 3, to avoid electric leakage of the battery cell 100 caused by an electrical connection between the electrode core 3 and the housing 1.

The insulation film 6 is glued to the first surface 34, so that a connection area between the insulation film 6 and the electrode core 3 can be increased, and mounting stability of the insulation film 6 can be improved. In addition, the cover plate 2 is disposed at an end portion of the electrode core 3 in the length direction, so that a possibility of a short-circuit connection between the two terminal poles 21 can be reduced, and reliability of the battery cell 100 can be improved.

In some embodiments of this application, the insulation film 6 is bonded to the housing 1. Based on the foregoing disposing, the electrode core 3 may be glued to the housing 1 through the insulation film 6. This can improve connection stability between the housing 1 and the electrode core 3, reduce a possibility that the electrode core 3 moves in the housing 1, improve mounting stability of the battery cell 100, and improve overall performance of the battery cell 100.

In some embodiments of this application, in a width direction of the electrode core 3, edges 61 of the two insulation films 6 on a same side are lapped over to insulate the electrode core 3 from the housing 1.

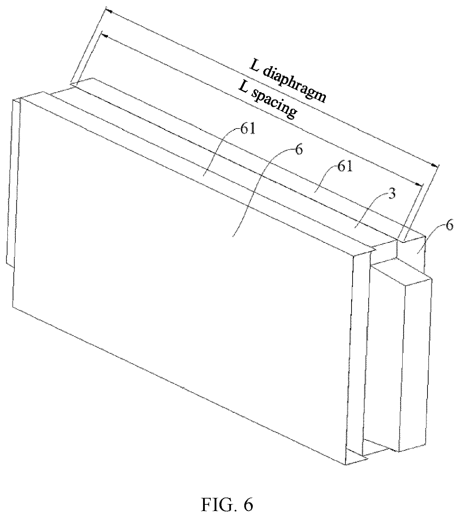

For example, as shown in FIG. 6 and FIG. 7, a width size of the insulation film 6 may be set to be greater than a width size of the electrode core 3, so that two sides of the insulation film 6 in the width direction can respectively extend to two side surfaces of the electrode core 3 in the width direction, and the edges 61 that are of the two insulation films 6 and that extend to a same side surface of the electrode core 3 in the width direction may be lapped over, so that the two insulation films 6 can surround and be fastened to a circumferential outer side of the electrode core 3, to insulate the electrode core 3 from the housing 1. This helps reduce a quantity of parts of the battery cell 100, reduce processing costs, improve insulation performance of the battery cell 100, and improve reliability of the battery cell 100.

In some embodiments of this application, a width of the insulation film 6 may be set to W2, which satisfies: W + T ≤ W2 ≤ W + 2T. In other words, the width (W2) of the insulation film 6 may be set to be greater than or equal to a sum of a thickness T of the electrode core 3 and a width W of the electrode core 3. When the insulation film 6 is attached to the first surface 34 of the electrode core 3, the edge 61 of the insulation film 6 may extend to a side surface of the electrode core 3 in the width direction, and a size of the edge 61 that is of the insulation film 6 and that extends to a side surface of the electrode core 3 in the width direction is greater than or equal to 1/2T, so that the edges 61 that are of the two insulation films 6 and that extend to a same side of the electrode core 3 in the width direction come into contact or have an overlapping part, and the edges 61 of the two insulation films 6 can be lapped over. In addition, the width W2 of the insulation film 6 may be set to be less than or equal to a sum of the thickness T of the electrode core 3 and twice the width W of the electrode core 3, so that a size of the edge 61 that is of the insulation film 6 and that extends to a side surface of the electrode core 3 in the width direction is less than or equal to T, which can prevent the edge 61 of the insulation film 6 from extending to the other first surface 34, and help reduce mounting difficulty of the insulation film 6. This helps reduce mounting difficulty of the battery cell 100, and improves practicality of the battery cell 100.

In some embodiments of this application, in the width direction of the electrode core 3, the electrode core 3 is provided with second surfaces 35 that are disposed opposite to each other, the second surface 35 is provided with an adhesive member, and the adhesive member and each insulation film 6 have an overlapping region.

For example, as shown in FIG. 6 and FIG. 7, the side surface of the electrode core 3 in the width direction may be considered the second surface 35. The two second surfaces 35 are disposed opposite to each other. The edge 61 of the insulation film 6 attached to the first surface 34 may extend to a position directly opposite to the second surface 35, and at least parts of the edges 61 that are of the two insulation films 6 and that extend to the second surface 35 do not overlap. The adhesive member is disposed on the second surface 35, and the adhesive member and each insulation film 6 have the overlapping region. The adhesive member may be glued to the edges 61 of the two insulation films 6 separately, to separately fasten the edges 61 of the two insulation films 6 to the second surface 35. This helps improve mounting stability of the insulation film 6, and improves reliability of the battery cell 100.

This application further provides a battery module.

The battery module according to an embodiment of this application includes a box and a plurality of battery cells 100, where the battery cell 100 is the battery cell 100 in any one of the foregoing embodiments, and the plurality of battery cells 100 are disposed in the box.

For example, the battery module may be disposed to have the box and the plurality of battery cells 100. The box may be constructed as a square structure, and a mounting cavity is formed in the box. The plurality of battery cells 100 are mounted in the mounting cavity, and the plurality of battery cells 100 may be arranged sequentially or arranged at intervals. The plurality of battery cells 100 are configured to perform synchronous charging and discharging, so that the battery module can operate stably.

According to the battery module in this embodiment of this application, the minimum distance between the support portions 5 on two sides of the electrode core 3 is limited to a range, so that the support portions 5 on two sides can limit the diaphragm 33 of the electrode core 3, to avoid relative movement between the diaphragm 33 and the positive electrode plate 31 or the negative electrode plate 32. This reduces a possibility of deformation of the electrode core 3, improves overall stability of the electrode core 3, improves reliability of the battery cell 100, and helps improve reliability of the battery module.

This application further provides a vehicle.

The vehicle according to an embodiment of this application includes the battery module according to any one of the foregoing embodiments.

According to the vehicle in this embodiment of this application, the minimum distance between the support portions 5 on two sides of the electrode core 3 is limited to a range, so that the support portions 5 on two sides can limit the diaphragm 33 of the electrode core 3, to avoid relative movement between the diaphragm 33 and the positive electrode plate 31 or the negative electrode plate 32. This reduces a possibility of deformation of the electrode core 3, improves overall stability of the electrode core 3, improves reliability of the battery cell 100, helps improve reliability of the battery module, and improves overall performance of the vehicle.

In descriptions of this specification, reference to descriptions of the terms such as "one embodiment", "some embodiments", "exemplary embodiment", "example", "specific example", or "some examples" means that specific features, structures, materials, or characteristics described with reference to the embodiment or example are included in at least one embodiment or example of this application. In this specification, illustrative expressions of the foregoing terms do not necessarily refer to a same embodiment or example. Furthermore, described specific features, structures, materials, or characteristics may be combined in any one or more embodiments or examples in a suitable manner.

Although embodiments of this application have been shown and described, a person of ordinary skill in the art may understand that various changes, modifications, replacements, and variations may be made to these embodiments without departing from the principles and objectives of this application, and the scope of this application is defined by the claims and equivalents thereof.

## Claims

1. A battery cell (100), comprising:
a housing (1), wherein in a first direction, cover plates (2) are disposed on two opposite sides of the housing (1), and a terminal pole (21) is disposed on each of the cover plates (2); and
an electrode core (3), wherein the electrode core (3) is disposed in the housing (1), the electrode core (3) comprises a positive electrode plate (31), a negative electrode plate (32), and a diaphragm (33), the diaphragm (33) is disposed between the positive electrode plate (31) and the negative electrode plate (32), the positive electrode plate (31) is electrically connected to one of the terminal poles (21) through a positive tab, and the negative electrode plate (32) is electrically connected to the other of the terminal poles (21) through a negative tab (321), wherein
support portions (5) abutting against the diaphragm (33) are disposed on inner sides of the two cover plates (2); and
in the first direction, a length of the diaphragm (33) is 'L diaphragm', a minimum distance between the support portions (5) on two sides of the electrode core (3) is 'L spacing', and the battery cell (100) meets the following condition: L diaphragm - 6 mm < L spacing ≤ L diaphragm.

2. The battery cell (100) according to claim 1, wherein a spacer ring (4) is disposed on an inner side of at least one of the cover plates (2), an accommodating cavity (41) configured to accommodate the positive tab or the negative tab (321) is disposed on the spacer ring (4), and the support portion (5) is disposed on the corresponding spacer ring (4).

3. The battery cell (100) according to claim 1 or 2, wherein the support portion (5) and the cover plate (2) are an integral member.

4. The battery cell (100) according to any one of claims 1 to 3, wherein a value of a length (H) of the battery cell (100) is 400 mm ≤ H ≤ 1500 mm, a value of a height (W) of the battery cell (100) is 80 mm ≤ W ≤ 240 mm, and a value of a thickness (T) of the battery cell (100) is 10 mm ≤ T ≤ 40 mm.

5. The battery cell (100) according to any one of claims 1 to 4, wherein the electrode core (3) comprises two first surfaces (34) disposed opposite to each other, and an area of the first surfaces (34) is greater than an area of a remaining surface of the electrode core (3); and
the battery cell (100) further comprises two insulation films (6), and the two insulation films (6) are respectively attached to the two first surfaces (34), wherein the first direction is a length direction of the first surface (34).

6. The battery cell (100) according to claim 5, wherein the insulation film (6) is bonded to the housing (1).

7. The battery cell (100) according to claim 5 or 6, wherein in a width direction of the electrode core (3), edges (61) of the two insulation films (6) on a same side are lapped over to insulate the electrode core (3) from the housing (1).

8. The battery cell (100) according to any one of claims 5 to 7, wherein in the width direction of the electrode core (3), the electrode core (3) is provided with second surfaces (35) disposed opposite to each other, the second surface (35) is provided with an adhesive member, and the adhesive member and each of the insulation films (6) have an overlapping region.

9. A battery module, comprising:
a box; and
a plurality of battery cells (100), wherein the battery cell (100) is the battery cell (100) according to any one of claims 1 to 8, and the plurality of battery cells (100) are disposed in the box.

10. A vehicle, comprising the battery module according to claim 9.
